# FASCICULE DE BREVET EUROPEEN

(11) **EP 2 227 819 B1**
(45) Date de publication et mention de la délivrance du brevet: **22.02.2012**
(21) Numéro de dépôt: 09714160.0
(22) Date de dépôt: 08.01.2009
(51) Int. Cl.: H01J 3/02, H01J 33/00, H01S 3/097

(54) **SOURCE PUISÉE D'ÉLECTRONS, PROCÉDÉ D'ALIMENTATION ÉLECTRIQUE POUR SOURCE PUISÉE D'ÉLECTRONS ET PROCÉDÉ DE COMMANDE D'UNE SOURCE PUISÉE D'ÉLECTRONS**
ELEKTRONENPUMPQUELLE, STROMVERSORGUNGSVERFAHREN FÜR EINE ELEKTRONENPUMPQUELLE UND VERFAHREN ZUR STEUERUNG EINER ELEKTRONENPUMPQUELLE
PUMPED ELECTRON SOURCE, POWER SUPPLY METHOD FOR PUMPED ELECTRON SOURCE AND METHOD FOR CONTROLLING AN ELECTRON PUMPED SOURCE

(30) Priorité: 11.01.2008 FR 0800165
(43) Date de publication de la demande: 15.09.2010
(73) Titulaire: Excico Group, 2018 Antwerpen (BE)
(72) Inventeur: MAKAROV, Maxime, F-78220 Viroflay (FR)
(74) Mandataire: de Kernier, Gabriel
(86) Numéro de dépôt international: PCT/FR2009/000018
(87) Numéro de publication internationale: WO 2009/106759

(56) Documents cités:
- FR-A- 2 312 104
- FR-A- 2 591 035
- FR-A- 2 615 324
- US-A- 4 642 522

## Description

L'invention relève du domaine des sources pulsées d'électrons et des dispositifs mettant en oeuvre de telles sources. Une source pulsée d'électrons peut être mise en oeuvre dans un laser à gaz à excitation électronique ou encore dans un générateur magnétohydrodynamique.

Le document FR 2 204 882 décrit une source d'électrons comportant une enceinte emplie d'un gaz sous faible pression munie d'une fenêtre de sortie des électrons, une cathode froide à haute tension négative par rapport à la fenêtre pour l'émission d'électrons secondaires, une chambre d'ionisation du gaz ménageant un passage pour la circulation des ions vers la cathode et la circulation des électrons secondaires vers la fenêtre, et un écran ou grille disposé entre la cathode et la chambre d'ionisation et porté à un potentiel proche de celui de la fenêtre pour créer entre la grille et la fenêtre et dans la chambre d'ionisation un espace sensiblement équipotentiel, et entre la grille et la cathode un espace à gradient de potentiel élevé.

La Demanderesse s'est aperçue que la grille posait des difficultés particulières. En effet, d'une part la grille doit isoler les deux chambres en prévenant une fuite parasite des ions primaires de la chambre d'ionisation vers la chambre d'accélération pendant l'ionisation. D'autre part, la grille doit être la plus transparente possible pour faire passer avec le minimum de perte le faisceau d'électrons formé dans la chambre d'accélération pendant l'accélération. La séparation ne peut être que partielle quand une partie des ions créée dans la chambre d'ionisation pénètre dans la chambre d'accélération et influence son fonctionnement.

Le document FR 2 591 035 propose d'utiliser une grille de forme spéciale pour rendre la séparation plus efficace entre les deux chambres. Toutefois, le plasma primaire pénètre dans la chambre d'accélération et enveloppe la cathode. Il en résulte une perturbation du fonctionnement de l'alimentation à haute tension impulsionnelle de la cathode, un allongement de l'impulsion de courant du faisceau électronique et une détérioration du contraste.

L'utilisation d'une deuxième grille auxiliaire portée à un potentiel négatif pour repousser les électrons libres à l'intérieur de la chambre d'ionisation ou à un potentiel positif pour repousser les ions positifs de la frontière de séparation entre les deux chambres nécessite l'utilisation d'une alimentation électrique supplémentaire et complique de la sorte l'ensemble de la source pulsée d'électrons. Le faisceau électronique formé dans la chambre d'accélération est obligé de passer au travers des grilles ce qui d'une part atténue le faisceau électronique et d'autre part endommage les grilles. L'endommagement des grilles conduit à limiter le courant du faisceau électronique et réduit considérablement la durée de vie des grilles et donc de la source.

L'invention a notamment pour but de remédier aux inconvénients de l'art antérieur ci-dessus.

L'invention a notamment pour but de fournir une source électronique à longue durée de vie, à alimentation haute tension de puissance faible, à rendement d'électrons élevé entre la cathode et la sortie de la source et à fort contraste du courant du faisceau électronique.

La source pulsée d'électrons selon l'invention comprend une chambre d'ionisation, une chambre d'accélération munie d'une électrode pour extraire et accélérer les ions primaires et former un faisceau d'électrons secondaires, une alimentation électrique configurée pour appliquer à l'électrode une tension positive pour repousser un plasma primaire hors de la chambre d'accélération et une impulsion de tension négative pour extraire et accélérer les ions primaires et former un faisceau d'électrons secondaires. La tension positive appliquée à l'électrode permet d'éloigner les ions positifs de la chambre d'accélération.

Dans un mode de réalisation, l'électrode présente une forme générale cylindrique convexe. L'électrode peut être pourvue d'une partie centrale plate ou concave située en regard d'une fente reliant la chambre d'ionisation et la chambre d'accélération. On favorise ainsi l'émission d'un faisceau d'électrons concentré en direction de la fente.

Dans un mode de réalisation, la chambre d'ionisation et la chambre d'accélération sont reliées par une fente ouverte. Il est possible de se passer de la présence d'une grille. La structure de la source est simplifiée. L'atténuation du faisceau électronique est réduite. La durée de vie de la source n'est plus limitée par celle de la grille.

Dans un mode de réalisation, la chambre d'ionisation et la chambre d'accélération sont reliées par une fente disposée entre la partie centrale de l'électrode et une sortie de la chambre d'ionisation. La fente est disposée sur le trajet du faisceau d'électrons entre l'électrode et la sortie de la chambre d'ionisation.

La sortie de la chambre d'ionisation peut être ouverte. Alternativement, la sortie de la chambre d'ionisation peut être munie d'au moins une grille. La sortie de la chambre d'ionisation peut être fermée par une feuille comprenant une couche métallique pour convertir les électrons en rayons X. La couche métallique peut comprendre au moins un métal de masse atomique supérieure à 50.

Dans un mode de réalisation, l'alimentation comprend un transformateur impulsionnel pourvu d'un primaire relié à une source de tension continue par l'intermédiaire d'un condensateur. Un interrupteur peut être disposé entre la masse et une borne du condensateur du côté opposé au primaire. Le transformateur impulsionnel est pourvu d'un secondaire relié à l'électrode. Une source auxiliaire de tension est disposée pour appliquer à ladite électrode ladite tension positive. La source auxiliaire de tension peut être disposée entre la masse et l'électrode. La source auxiliaire de tension peut être disposée en série avec le secondaire du transformateur. Une capacité peut être mise en parallèle avec la source de tension. Une alimentation électrique peut ainsi assurer la génération d'une tension positive de polarisation de l'électrode et la génération d'une impulsion de tension négative appliquée à ladite électrode. L'alimentation électrique présente une structure simple et économique.

Dans un mode de réalisation, l'alimentation comprend une protection en série avec la source auxiliaire de tension. La protection peut comprendre au moins une diode, une capacité et/ou une inductance.

La source auxiliaire de tension peut présenter une tension comprise en 100 et 500 volts, préférablement entre 200 et 400 volts.

En d'autres termes, une source pulsée d'électrons comprend une chambre d'ionisation, une chambre d'accélération munie d'une électrode pour extraire et accélérer les ions primaires et former un faisceau d'électrons secondaires, une ouverture entre la chambre d'ionisation et la chambre d'accélération, un moyen pour obturer électriquement ladite ouverture, et une alimentation électrique impulsionnelle pour appliquer à l'électrode une haute tension négative de formation d'un faisceau d'électrons.

Dans un mode de réalisation, la chambre d'ionisation comprend une électrode en vue d'une décharge électrique entre ladite électrode et les parois internes de la chambre d'ionisation formant une cathode creuse. L'électrode de la chambre d'ionisation peut se présenter sous la forme d'un ou plusieurs filaments. Ladite électrode peut être alimentée par une alimentation électrique susceptible de fournir une tension positive, impulsionnelle ou continue, de l'ordre de quelques kV, par exemple comprise en 1 et 10 kV. Une alimentation impulsionnelle peut fournir une impulsion d'une durée comprise en 1 et 10 microsecondes, de courant crête compris en 100 et 1000 A, et/ou de tension comprise entre 5 et 10 kV.

En fonctionnement, l'ionisation au sein de la chambre d'ionisation peut être obtenue en maintenant les parois internes de la chambre d'ionisation formant cathode creuse à la masse, en portant l'électrode de la chambre d'ionisation à une tension positive comprise entre 1 et 10 kV et en portant l'électrode de la chambre d'accélération à un potentiel positif compris entre 100 et 500 volts. On protège ainsi la chambre d'accélération contre la pénétration d'ions positifs du plasma primaire en provenance de la chambre d'ionisation au travers de l'ouverture entre lesdites chambres. Pour un régime spécifique de fonctionnement de la source, la tension appliquée à l'électrode de la chambre d'accélération peut être calculée en fonction de la nature du gaz, notamment de sa masse atomique, de la pression du gaz, de la tension et du courant de l'électrode de la chambre d'ionisation, de l'ouverture et de la profondeur de la fente entre lesdites chambres, etc. Une fois que la décharge primaire est générée dans la chambre d'ionisation, une tension impulsionnelle négative de l'ordre de -50 à -200 kV est appliquée à l'électrode de la chambre d'accélération. Les ions positifs primaires présents dans la chambre d'ionisation sont alors accélérés à travers la fente vers l'électrode de la chambre d'accélération. Ladite électrode de la chambre d'accélération se trouve bombardée par des ions positifs. Le bombardement produit des électrons secondaires qui sont accélérés par ledit potentiel négatif vers la sortie de la source en passant par ladite fente.

Un dispositif d'alimentation électrique pour source pulsée d'électrons comprend un moyen pour appliquer à une électrode d'une chambre d'accélération de la source, une tension positive, puis une impulsion de tension négative pour extraire et accélérer les ions primaires et former un faisceau d'électrons secondaires. La tension positive permet de réduire la quantité d'ions positifs présents dans la chambre d'accélération préalablement à l'impulsion de tension négative. Le dispositif peut comprendre une source électrique auxiliaire reliée à l'électrode de la chambre d'ionisation. Le dispositif peut comprendre un transformateur impulsionnel élévateur de tension. Le secondaire du transformateur peut être relié à l'électrode de la chambre d'ionisation pour appliquer ladite impulsion de tension négative.

Le procédé de commande d'une source pulsée d'électrons comprenant une chambre d'ionisation et une chambre d'accélération pour extraire et accélérer les ions primaires et former un faisceau d'électrons secondaires, comprend une étape d'application à ladite électrode d'une tension positive fournie par une alimentation électrique pour repousser un plasma primaire hors de la chambre d'accélération et une étape d'application à ladite électrode d'une impulsion de tension négative fournie par l'alimentation électrique pour extraire et accélérer les ions primaires et former un faisceau d'électrons secondaires.

Au moment de l'application de la haute tension négative à l'électrode de la chambre d'accélération, le voisinage de l'électrode se trouve sensiblement dépourvu de plasma d'ions positifs. En d'autres termes, le plasma se trouve sensiblement confiné dans la chambre d'ionisation. La chambre d'accélération est sensiblement dépourvue de plasma. Il en résulte que la capacité parasite entre l'électrode et le plasma est très faible en comparaison de la capacité parasite en présence de plasma dans la chambre d'accélération. L'obtention d'une tension d'accélération souhaitée peut être réalisée à partir d'une tension de charge de l'alimentation électrique de l'électrode nettement plus faible. La puissance de l'alimentation haute tension de l'électrode d'accélération peut être réduite ce qui s'avère particulièrement économique. Le faisceau électronique subit une atténuation plus faible. L'impulsion de courant du faisceau électronique présente un contraste satisfaisant.

La présente invention sera mieux comprise à la lecture de la description détaillée de quelques modes de réalisation pris à titre d'exemples nullement limitatifs et illustrés par les dessins annexés, sur lesquels :
- la figure 1 est une vue schématique en coupe d'une source pulsée d'électrons ; et
- les figure 2 et 3 sont des schémas électriques d'alimentations de l'électrode de la chambre d'accélération ;

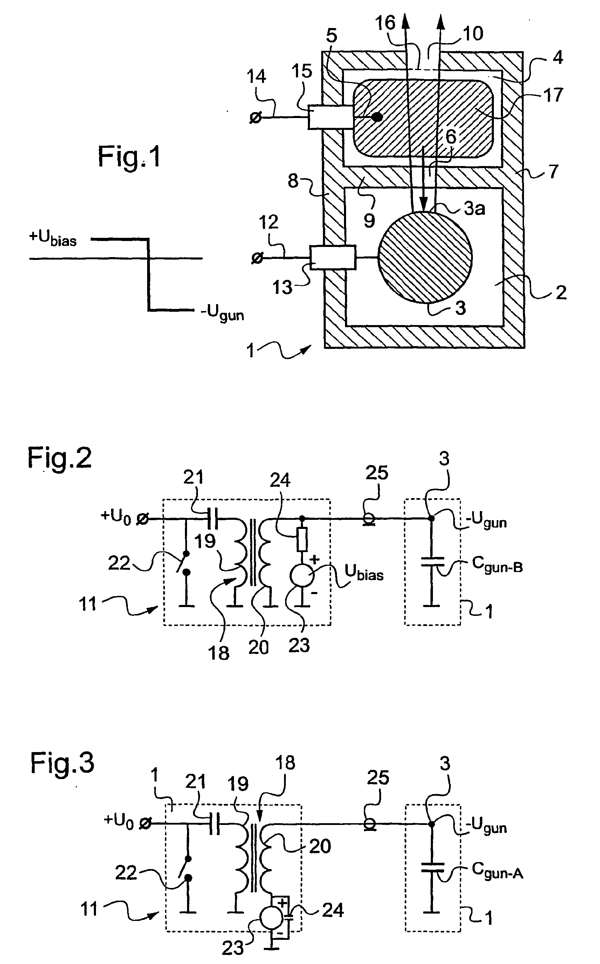

Comme on peut le voir sur la figure 1, la source pulsée d'électrons 1 comprend une chambre d'accélération 2 dans laquelle est disposée une électrode 3, et une chambre d'ionisation 4 dans laquelle est disposée une électrode 5. Une fente 6 met en communication la chambre d'accélération 2 et la chambre d'ionisation 4. Les chambres d'accélération 2 et d'ionisation 4 sont formées par une enceinte 7 comprenant des parois extérieures 8 et une paroi intérieure 9 délimitant les chambres d'accélération 2 et d'ionisation 4. En d'autres termes, la chambre d'accélération 2 est délimitée par plusieurs parois extérieures 8 et la paroi intérieure 9. La chambre d'ionisation 4 est délimitée par plusieurs parois extérieures 8 et par la paroi intérieure 9. La paroi intérieure 9 est commune aux chambres d'accélération 2 et d'ionisation 4. Les parois 8 et 9 sont métalliques, par exemple à base d'acier inoxydable ou de laiton, éventuellement recouvert intérieurement d'une couche à base d'aluminium ou de nickel. L'électrode 5 peut comprendre un ou plusieurs fils allongés selon la direction principale de la chambre 4. Le fil peut être alimenté à ses deux extrémités en vue d'une homogénéité accrue du champ électrique.

Dans le plan de coupe de la figure 1, les chambres d'accélération 2 et d'ionisation 4 peuvent être sensiblement rectangulaires, la source pouvant présenter une forme de parallélépipède rectangle ou encore une forme tubulaire. Dans ce dernier cas, la paroi intérieure 9 peut être circulaire. La source 1 est munie d'une sortie 10 sous la forme d'un trou ménagé dans la paroi extérieure 8 délimitant la chambre d'ionisation 4 du côté opposé à la paroi intérieure 9. La sortie 10, la fente 6 et l'électrode 3 de la chambre d'accélération 2 sont alignées.

Plus précisément, l'électrode d'accélération 3 peut se présenter sous la forme d'une pièce cylindrique par exemple de forme généraletubulaire .

L'électrode 3 est reliée à une alimentation électrique 11, voir figure 2, par un câble électrique 12 traversant une paroi extérieure 8 par un isolateur étanche 13. L'électrode 5 de la chambre d'ionisation 4 peut se présenter sous la forme d'un ou plusieurs filaments et est reliée à une alimentation électrique extérieure non représentée par un câble électrique 14 traversant un isolateur étanche 15. Les isolateurs étanches 13 et 15 peuvent comprendre de la céramique. Les isolateurs étanches 13 et 15 assurent une fonction d'étanchéité au gaz et de traversée électrique.

Lors d'une première étape, l'enceinte 7 est mise à la masse. L'électrode 5 de la chambre d'ionisation 4 est portée à une tension positive comprise entre 1 et 10 kV. Ladite tension peut être impulsionnelle ou continue. La chambre d'ionisation 4 étant au préalable remplie avec un gaz, par exemple un gaz rare, notamment de l'hélium ou encore un mélange d'hélium et de néon à une faible pression de l'ordre de 1 à 20 pascals.

La sortie 10 de la source 1 peut être ouverte ou encore munie d'une grille de contrôle du faisceau si les conditions gazeuses à l'extérieur de la source 1 sont proches de celles régnant dans les chambres d'ionisation 4 et d'accélération 2. La sortie 10 peut, le cas échéant, être munie d'un obturateur 16. L'obturateur 16 peut comprendre une feuille métallique ou en matériau synthétique de faible épaisseur avec une couche fine de métal lourd. La couche de métal lourd peut présenter une épaisseur de l'ordre de 1 à 10 p. La couche de métal lourd peut comprendre un ou plusieurs métaux de masse atomique supérieure à 50, par exemple de l'or, du tantale, du tungstène, etc. La couche de métal lourd permet de convertir le faisceau électronique en un faisceau de rayons X.

La tension appliquée à l'électrode 5 provoque une décharge électrique entre ladite électrode 5 et les parois de la chambre d'ionisation 4. Ladite décharge génère un plasma 17 dans la chambre d'ionisation 4. La fente 6 créant une légère discontinuité de champ électrique, le plasma 17 pourrait avoir tendance à se répandre dans la chambre d'accélération 2. Toutefois, la polarisation positive U_{bias} appliquée à l'électrode d'accélération 3 permet de rétablir des lignes de champ électrique relativement régulières empêchant, ou à tout le moins limitant, la diffusion du plasma 17. Le plasma 17 comprend des ions positifs, par exemple He+ attirés par le potentiel électrique le plus faible et sur lesquels la tension positive de polarisation U_{bias} de l'électrode d'accélération 3 produit un effet de répulsion. On parvient ainsi à réduire très fortement le passage d'ions positifs du plasma 17 dans la chambre d'accélération 2 lors de la première phase dite d'ionisation.

En d'autres termes, on bénéficie d'une obturation électrique de la fente 6. La fente 6 à obturation électrique s'avère particulièrement avantageuse dans la mesure où la circulation d'éléments néfastes peut être fortement freinée tandis que la circulation dans la fente 6 d'éléments que l'on souhaite y faire passer est nettement moins gênée que lors de la présence d'une grille.

On peut alors passer à la deuxième étape dite d'accélération. On applique alors une haute tension négative -U_{gun} à l'électrode d'accélération 3. Les ions positifs du plasma 17 sont alors attirés par l'électrode d'accélération 3 réalisant ainsi un bombardement ionique de l'électrode d'accélération 3. Le bombardement ionique se produit pour une majeure partie sur le méplat 3a de ladite électrode 3 située en regard de la fente 6. Le bombardement ionique de l'électrode d'accélération 3, en particulier du méplat 3a provoque l'émission d'électrons. Les électrons subissent un effet répulsif de l'électrode d'accélération 3 en raison de la haute tension négative -U_{gun} et s'échappent par la fente 6 et la sortie 10 de la source 1. Le méplat 3a, la fente 6 et la sortie 10 étant alignés, les électrons accélérés par l'électrode d'accélération 3 peuvent traverser la fente 6 en subissant de très faibles pertes et la sortie 10, le cas échéant, en subissant des pertes dues à la présence de l'obturateur.

Lors de l'application de la haute tension négative -U_{gun} à l'électrode d'accélération 3, la chambre d'accélération 2 est sensiblement dépourvue de plasma. La capacité parasite entre l'électrode d'accélération 3 et l'enceinte 7 est alors très faible. Il en résulte que l'obtention de la tension -U_{gun} sur l'électrode 3 requiert une moindre énergie. Le dimensionnement de l'alimentation électrique 11 peut être revu à la baisse ce qui s'avère particulièrement économique. L'atténuation du faisceau électronique est réduite grâce à la fente ouverte 6. Par ailleurs, la fente 6 peut présenter des bords arrondis.Comme illustré sur la figure 2, l'alimentation électrique 11 comprend un transformateur impulsionnel 18 muni d'un primaire 19 et d'un secondaire 20. Le primaire 19 du transformateur impulsionnel 18 est relié d'une part à la masse et d'autre part à un condensateur 21. A l'opposé du primaire 19, le condensateur 21 est relié à source de tension U₀ et à un interrupteur 22. L'interrupteur 22 est également relié à la masse pour pouvoir court-circuiter le condensateur 21 et le primaire 19. Le secondaire 20 est relié d'une part à la masse de l'alimentation et d'autre part à l'électrode d'accélération 3 de la source d'électrons 1. L'alimentation électrique 11 comprend également montée parallèle au secondaire 20 une source auxiliaire de tension 23 fournissant la tension de polarisation U_{bias} et reliée d'une part à la masse de l'alimentation et d'autre part au point commun entre le secondaire 20 et l'électrode 3. Une protection 24 peut avantageusement être disposée en série avec la source auxiliaire 23 en vue de limiter la circulation de courant. La protection 24 peut comprendre au moins une diode, un condensateur et/ou une inductance. En outre, un capteur de courant 25 peut être prévu à la sortie de l'alimentation électrique 11 pour mesurer le courant consommé dans la chambre d'ionisation 2.

Lors de la première phase, l'interrupteur 22 forme un circuit ouvert. Le condensateur 21 est chargé à la tension U₀.

La source auxiliaire de tension 23 maintient l'électrode d'accélération 3 à la tension de polarisation positive U_{bias}. Pour limiter les pertes dans le secondaire 20, une diode, non représentée, peut être disposée entre le secondaire 20 et le point commun à la protection 24 et à l'électrode d'accélération 3. Après la fermeture de l'interrupteur 22 mettant en court-circuit le condensateur 21 et le primaire 19 du transformateur 18, une impulsion de haute tension négative -U_{gun} est fournie par le secondaire 20 du transformateur 18 et appliquée à l'électrode d'accélération 3.

Sur la figure 2, la source d'électrons 1 a été représentée sous sa forme équivalente électrique de la capacité parasite C_{gun}. La capacité parasite C_{gun} est considérablement réduite en raison de l'absence, ou à défaut de la très faible quantité, du plasma dans la chambre d'accélération 2 lors de la première étape d'ionisation. En cas de présence de plasma dans la chambre d'accélération 2, la polarisation du plasma génère une forte capacité parasite. Grâce à l'application de la tension de polarisation positive U_{bias} qui évite l'entrée d'ions positifs du plasma 17 dans la chambre d'accélération 2 lors de la première étape, la chambre d'accélération 2 est substantiellement dépourvue de plasma au moment de l'application de la haute tension négative -U_{gun} à l'électrode d'accélération 3. La capacité parasite C_{gun} reste donc faible. La tension de charge U₀ de l'alimentation 11 peut être réduite. Alternativement, le rapport de transformation du transformateur 18 peut être réduit.

Comme illustré sur la figure 3, la source auxiliaire 23 est en série afec le secondaire 20, par exemple entre la masse et le secondaire 20. La protection 24 peut comprendre un condensateur monté parallèlement à la source auxiliaire 23.

On dispose d'une source pulsée d'électrons à alimentation électrique de puissance réduite et donc plus économique. Le faisceau d'électrons subit des faibles pertes au passage entre la chambre d'accélération 2 et la chambre d'ionisation 4. La construction d'une fente ouverte 6 s'avère plus économique que celle d'une grille. La durée de vie de la source est prolongée en n'étant pas limitée par celle d'une grille entre les chambres.

## Revendications

1. Source pulsée d'électrons (1), comprenant une chambre d'ionisation (4), une chambre d'accélération (2) munie d'une électrode (3) pour extraire et accélérer les ions primaires et former un faisceau d'électrons secondaires, **caractérisée par le fait qu'**elle comprend une alimentation (11) configurée pour appliquer à ladite électrode (3) une tension positive pour repousser un plasma primaire (17) hors de la chambre d'accélération (2) et une impulsion de tension négative pour extraire et accélérer les ions primaires et former un faisceau d'électrons secondaires.

2. Source selon la revendication 1, dans laquelle l'électrode (3) présente une forme générale cylindrique convexe et est pourvue d'une partie centrale plate (3a) ou concave située en regard d'une fente (6) reliant la chambre d'ionisation (4) et la chambre d'accélération (2).

3. Source selon la revendication 1 ou 2, dans laquelle la chambre d'ionisation (4) et la chambre d'accélération (2) sont reliées par une fente ouverte (6).

4. Source selon l'une quelconque des revendications précédentes, dans laquelle la chambre d'ionisation (4) et la chambre d'accélération (2) sont reliées par une fente (6) disposée entre la partie centrale (3a) de l'électrode (3) et une sortie (10) de la chambre d'ionisation (4).

5. Source selon la revendication 4, dans laquelle ladite sortie (10) est ouverte.

6. Source selon la revendication 4, dans laquelle ladite sortie (10) est munie d'au moins une grille.

7. Source selon la revendication 4, dans laquelle ladite sortie (10) est fermée par une feuille (16) comprenant une couche métallique pour convertir les électrons en rayons X.

8. Source selon l'une quelconque des revendications précédentes, dans laquelle l'alimentation (11) comprend un transformateur impulsionnel (18) pourvu d'un primaire (19) relié à une source de tension continue par l'intermédiaire d'un condensateur (21), un interrupteur (22) étant disposé entre la masse et une borne du condensateur du côté opposé au primaire, et d'un secondaire (20) relié à l'électrode, une source auxiliaire de tension (23) étant disposée entre la masse et l'électrode pour appliquer à ladite électrode ladite tension positive.

9. Source selon la revendication 8, dans laquelle l'alimentation comprend une protection (24) en série avec la source auxiliaire de tension (23).

10. Source selon la revendication 8 ou 9, dans laquelle la source auxiliaire de tension (23) est montée en série avec le secondaire de transformateur.

11. Source selon la revendication 10, dans laquelle un condensateur est monté en parallèle avec la source auxiliaire.

12. Procédé de commande d'une source pulsée d'électrons (1) comprenant une chambre d'ionisation (4), une chambre d'accélération (2) munie d'une électrode (3) pour extraire et accélérer les ions primaires et former un faisceau d'électrons secondaires, comprenant une étape d'application à ladite électrode (3) d'une tension positive fournie par une alimentation électrique (11) pour repousser un plasma primaire hors de la chambre d'accélération et une étape d'application à ladite électrode (3) d'une impulsion de tension négative fournie par l'alimentation électrique (11) pour extraire et accélérer les ions primaires et former un faisceau d'électrons secondaires.

## Claims

1. Pulsed electron source (1) comprising an ionisation chamber (4), an acceleration chamber (2) provided with an electrode (3) for extracting and accelerating the primary ions and forming a beam of secondary electrons, **characterised in that** it comprises a power supply (11) which is configured so as to apply to said electrode (3) a positive voltage for driving a primary plasma (17) out of the acceleration chamber (2) and a negative voltage pulse for extracting and accelerating the primary ions and forming a beam of secondary electrons.

2. Source according to claim 1, wherein the electrode (3) is of generally convex cylindrical shape and is provided with a flat or concave central part (3a) located opposite a slot (6) connecting the ionisation chamber (4) and the acceleration chamber (2).

3. Source according to claim 1 or 2, wherein the ionisation chamber (4) and the acceleration chamber (2) are connected by an open slot (6).

4. Source according to any one of the preceding claims, wherein the ionisation chamber (4) and the acceleration chamber (2) are connected by a slot (6) arranged between the central part (3a) of the electrode (3) and an outlet (10) of the ionisation chamber (4).

5. Source according to claim 4, wherein the said outlet (10) is open.

6. Source according to claim 4, wherein the said outlet (10) is provided with at least one grid.

7. Source according to claim 4, wherein the said outlet (10) is closed off by a sheet (16) comprising a metal layer for converting the electrons into X rays.

8. Source according to any one of the preceding claims, wherein the power supply (11) comprises a pulsed transformer (18) provided with a primary (19) connected to a direct voltage source via a capacitor (21), a switch (22) being arranged between earth and a terminal of the capacitor on the side opposite the primary, and a secondary (20) connected to the electrode, an auxiliary voltage source (23) being arranged between earth and the electrode in order to apply said positive voltage to said electrode.

9. Source according to claim 8, wherein the power supply comprises a protective device (24) in series with the auxiliary voltage source (23).

10. Source according to claim 8 or 9, wherein the auxiliary voltage source (23) is mounted in series with the secondary of the transformer.

11. Source according to claim 10, wherein a capacitor is mounted in parallel with the auxiliary source.

12. Method of controlling a pulsed electron source (1) comprising an ionisation chamber (4), an acceleration chamber (2) provided with an electrode (3) for extracting and accelerating the primary ions and forming a beam of secondary electrons, comprising a step of applying to said electrode (3) a positive voltage supplied by an electrical power supply (11) for driving a primary plasma out of the acceleration chamber and a step of applying to said electrode (3) a negative voltage pulse supplied by the electrical power supply (11) in order to extract and accelerate the primary ions and form a beam of secondary electrons.

## Patentansprüche

1. Elektronenpumpquelle (1), mit einer Ionisationskammer (4), einer Beschleunigungskammer (2), die mit einer Elektrode (3) versehen ist, um die Primärionen zu gewinnen und zu beschleunigen, und um ein sekundäres Elektronenbündel zu bilden, **dadurch gekennzeichnet, dass** sie eine Einspeisung (11) aufweist, die ausgebildet ist, um auf die Elektrode (3) eine positive Spannung aufzubringen, um ein primäres Plasma (17) aus der Beschleunigungskammer (2) hinauszudrücken, und einen negativen Spannungsimpuls aufzubringen, um die Primärionen zu gewinnen und zu beschleunigen und um ein sekundäres Elektronenbündel zu bilden.

2. Quelle nach Anspruch 1, bei der die Elektrode (3) eine allgemein zylindrische konvexe Form aufweist und mit einem ebenen oder konkaven Mittenabschnitt (3a) versehen ist, der sich gegenüber einem Schlitz (6) befindet, der die Ionisierungskammer (4) und die Beschleunigungskammer (2) verbindet.

3. Quelle nach Anspruch 1 oder 2, bei der die Ionisationskammer (4) und die Beschleunigungskammer (2) durch einen offenen Schlitz (6) verbunden sind.

4. Quelle nach einem der vorhergehenden Ansprüche, bei der die Ionisationskammer (4) und die Beschleunigungskammer (2) durch einen Schlitz (6) verbunden sind, der zwischen dem Mittenabschnitt (3a) der Elektrode (3) und einem Ausgang (10) der Ionisationskammer (4) angeordnet ist.

5. Quelle nach Anspruch 4, bei der der Ausgang (10) offen ist.

6. Quelle nach Anspruch 4, bei der der Ausgang (10) mit wenigstens einem Gitter versehen ist.

7. Quelle nach Anspruch 4, bei der der Ausgang (10) durch ein Blatt (16) geschlossen ist, das eine Metallschicht aufweist, um die Elektronen in Röntgenstrahlen umzuwandeln.

8. Quelle nach einem der vorhergehenden Ansprüche, bei der die Einspeisung (11) einen Impulstransformator (18) aufweist, der mit einer Primärspule (19) versehen ist, die mit einer kontinuierlichen Spannungsquelle über einen Kondensator (21) verbunden ist, wobei ein Unterbrecher (22) zwischen der Masse und einer Klemme des Kondensators auf der gegenüberliegenden Seite zur Primärspule angeordnet ist, und mit einer Sekundärspule (20) versehen ist, die mit der Elektrode verbunden ist, wobei eine Hilfsspannungsquelle (23) zwischen der Masse und der Elektrode angeordnet ist, um auf die Elektrode die positive Spannung aufzubringen.

9. Quelle nach Anspruch 8, bei der die Einspeisung einen Schutz (24) in Reihe mit der Hilfsspannungsquelle (23) aufweist.

10. Quelle nach Anspruch 8 oder 9, bei der die Hilfsspannungsquelle (23) in Reihe mit der Sekundärspule des Transformators angebracht ist.

11. Quelle nach Anspruch 10, bei der ein Kondensator parallel zur Hilfsquelle angebracht ist.

12. Verfahren zum Steuern einer Elektronenpumpquelle (1), die eine Ionisationskammer (4), eine Beschleunigungskammer (2) aufweist, die mit einer Elektrode (3) versehen ist, um die Primärionen zu gewinnen und zu beschleunigen und ein Sekundärelektronenbündel zu bilden, mit einem Schritt des Aufbringens auf die Elektrode (3) einer positiven Spannung, die durch eine elektrische Einspeisung (11) geliefert wird, um ein Primärplasma aus der Beschleunigungskammer hinauszudrücken, und mit einem Schritt des Aufbringens auf die Elektrode (3) eines Impulses von negativer Spannung, die durch die elektrische Einspeisung (11) geliefert wird, um die Primärionen zu gewinnen und zu beschleunigen, und um ein Sekundärelektronenbündel zu bilden.
